Europäisches Patentamt

European Patent Office

Office européen des brevets

(19)

(11) Numéro de publication : **0 010 050**
**B1**

(12)                         FASCICULE DE BREVET EUROPÉEN

(45) Date de publication du fascicule du brevet :
22.09.82

(51) Int. Cl.³ : **C 08 G 63/18**, C 08 G 63/22

(21) Numéro de dépôt : 79420043.6

(22) Date de dépôt : 24.09.79

(54) Procédé de préparation de copolyesters aromatiques.

(30) Priorité : 05.10.78 FR 7828948

(43) Date de publication de la demande :
16.04.80 (Bulletin 80/08)

(45) Mention de la délivrance du brevet :
22.09.82 Bulletin 82/38

(84) Etats contractants désignés :
AT BE CH DE GB IT LU NL SE

(56) Documents cités :
FR A 2 375 270
US A 2 595 343

(73) Titulaire : RHONE-POULENC INDUSTRIES
22 Avenue Montaigne
F-75008 Paris (FR)

(72) Inventeur : Fayolle, Bernard
8, rue Fayolle
F-69130 Ecully (FR)

(74) Mandataire : Troillet, Maurice et al
RHONE-POULENC RECHERCHES Centre de Recherches de Saint-Fons Service Brevets B.P. 62
F-69190 Saint-Fons (FR)

EP 0 010 050 B1

# 0 010 050

## Procédé de préparation de copolyesters aromatiques

La présente invention concerne un procédé pour l'obtention de copolyesters aromatiques conformables, peu colorés, de masse moléculaire élevée. Une telle réaction est réalisable rapidement avec un bon rendement. L'invention concerne également les produits obtenus selon ce procédé.

Il est déjà connu par exemple d'après le brevet français 1 547 346 de préparer des copolyesters aromatiques à partir de diphénols halogénés et de chlorure de diacides carboxyliques. Mais ce procédé a pour inconvénient d'augmenter le coût d'obtention des polymères, à cause de l'utilisation de chlorure d'acide et de favoriser certaines réactions secondaires indésirables.

Il est également connu selon la demande japonaise 65 598/77 de préparer des copolyesters aromatiques à partir d'un diacide aromatique, un diacide aliphatique et un diester d'un composé dihydroxy aromatique, par chauffage simultané desdits composés sous pression atmosphérique en présence d'un gaz inerte puis polycondensation sous vide en utilisant une gamme de température supérieure à 250 °C; la durée totale de la réaction selon les exemples, étant supérieure à 6 heures. Mais un tel procédé ne permet pas d'obtenir des copolyesters de masses moléculaires très élevées telles que mises en évidence par leurs viscosités inhérentes ; par ailleurs ces polyesters possèdent une coloration indésirable.

Il a maintenant été trouvé un procédé pour l'obtention de copolyesters aromatiques de masse moléculaire élevée par réaction d'abord à température inférieure à 250 °C entre un diester d'un composé dihydroxyaromatique et un diacide aliphatique avec un rapport molaire du diester au diacide compris entre 1,5 et 4 jusqu'à un taux d'avancement de la réaction d'au moins 85 % puis réaction à température supérieure à 250 °C après addition d'acide dicarboxylique aromatique et/ou cycloaliphatique et polycondensation sous pression réduite pendant une durée inférieure ou égale à 1 h 30.

Par diester d'un composé dihydroxy aromatique que pour plus de commodité dans la suite du texte on désignera par diester de diphénol, on entend des composés de formule RCOO—X—OOCR dans laquelle R est un radical $CH_3(CH_2)_m$ avec m = 0 à 8, de préférence m = 0 pour des raisons d'économie, X est un radical ortho, méta ou para-phénylène, diphénylène-4,4', diphénylène sulfone, diphénylène éther, diphénylène alcane ou diphénoxyalcane dans lesquels chacun des noyaux phénylène, peut comporter par exemple 1 ou 2 substituants choisis parmi les atomes d'halogène (de préférence chlore ou brome) ou des radicaux méthyle, éthyle ou méthoxy.

Par diacide aliphatique, on entend les diacides de formule générale $HOOC(CH_2)_nCOOH$ avec $3 \leqslant n \leqslant 10$, utilisés seuls ou en mélange.

Parmi ces diacides, on peut citer l'acide glutarique, l'acide sébacique et de préférence l'acide adipique.

La première phase du procédé est effectuée avec un rapport molaire diester de diphénol/diacide aliphatique compris entre 1,5 et 4, de préférence entre 2 et 4 jusqu'à un taux d'avancement de la réaction d'au moins 85 % de préférence au moins 90 % (calculé en taux d'acide aliphatique transformé) sous atmosphère inerte (azote ou argon par exemple). Eventuellement la réaction peut être terminée sous pression réduite.

La réaction d'acidolyse entre le diester de diphénol et le diacide aliphatique a lieu à température inférieure à 250 °C, de préférence inférieure ou égale à 240 °C. Cette première phase peut être réalisée en présence de catalyseurs spécifiques tels que les acétates de magnésium, zinc, calcium, manganèse, le trioxyde d'antimoine, l'orthotitanate de tétrabutyle. Elle a lieu en un temps relativement court, généralement peu supérieur à 1 heure.

La seconde phase de la réaction d'acidolyse consiste à introduire un acide dicarboxylique aromatique et/ou cycloaliphatique, à une température supérieure à 250 °C, plus généralement comprise entre 250 °C et 320 °C sous pression atmosphérique et sous atmosphère inerte, avec un rapport molaire diester de diphénol/quantité totale de diacides compris entre 0,95 et 1,05.

Par acides dicarboxyliques aromatiques et/ou cycloaliphatiques, on entend des diacides de formule générale HOOC—Y—COOH dans laquelle Y représente un radical méta ou paraphénylène, cyclohexylène-1,3 ou -1,4 diphénylène-4,4', diphénylène sulfone, diphénylène éther, diphénylène alcane, diphénoxyalcane ou un radical comportant des noyaux aromatiques condensés dont les liaisons libres sont situées en position 2,6 ou 2,7, chacun des cycles pouvant comporter par exemple 1 ou 2 substituants choisis parmi les atomes d'halogène (de préférence chlore ou brome), les radicaux méthyle, éthyle ou méthoxy.

Parmi ces diacides, on peut citer : les acides téréphtalique, isophtalique, le dicarboxy-4,4' diphényle, le dicarboxy-4,4' diphényle, le dicarboxy-4,4' diphényl éther, le pp-dicarboxy-diphénoxy-1,2 éthane, le dicarboxy-2,6 naphtalène, l'acide hexahydrotéréphtalique, etc...

Par rapport aux procédés connus, la réaction d'acidolyse effectuée en deux phases selon la présente invention possède un meilleur rendement et la quantité de sous produits formés en cours de réaction est moins importante.

Par ailleurs, le procédé selon l'invention est généralement effectué en un temps plus court que les procédés connus.

Après polycondensation sous vide poussé pendant une durée inférieure ou égale à 1 h 30, on obtient

**0 010 050**

des copolyesters aromatiques de masse moléculaire élevée et peu colorés. Ils possèdent notamment une viscosité inhérente plus élevée et une coloration moins prononcée que les copolyesters obtenus selon le procédé de la demande japonaise 65 598/77.

Les copolyesters ainsi obtenus sont généralement filables, filmables et/ou moulables à l'état fondu selon les composés dont ils sont issus.

Dans les exemples qui suivent les parties s'entendent en poids et la viscosité inhérente est mesurée à 25 °C sur une solution à 0,5 % dans un mélange p-chlorophénol/dichloréthane à 50/50 en volume.

Les mesures de luminance sont effectuées sur un appareil spectrophotomètre Leres du type « Trilac ».

### Exemple 1

Dans un réacteur à polycondensation de 350 ml agité et chauffé par un bain métallique, on introduit :

| | | |
|---|---|---|
| — diacétate d'hydroquinone | 77,6 | parties |
| — acide adipique | 35,04 | parties |
| — acétate de magnésium | 0,060 8 | parties |

On purge l'appareil à l'argon et on chauffe avec le bain métallique. La réaction débute à 230 °C et dure 35 minutes sous pression atmosphérique, la température atteignant 243 °C à la fin de cette phase. La pression est abaissée à 532.10$^2$ Pa en 5 minutes et est maintenue pendant 10 minutes en fin de réaction.

Durée totale de la première phase 1 h 10, au cours de laquelle l'acide acétique distille.

Taux de transformation, (calculé en taux d'acide adipique transformé) 92,3 %.

On introduit alors 26,56 parties d'acide téréphtalique tandis que la température de la masse réactionnelle est élevée à 270 °C pour atteindre en fin de réaction 325 °C. La réaction dure 1 h 40 environ sous pression atmosphérique et le taux de transformation, calculé sur l'ensemble des diacides est de 87,7 %.

La pression est ensuite abaissée en 30 minutes à 6,65.10$^2$ Pa puis à 1,33.10$^2$ Pa et la polycondensation est effectuée à cette pression pendant 15 minutes à 320 °C.

| | |
|---|---|
| Déroulement de la réaction : | |
| temps total | 3 h 20 |

| | |
|---|---|
| Rendement de la réaction d'acidolyse : | |
| fin de la 1$^{re}$ phase | 92,3 % |
| fin des deux phases | 87,7 % |
| acide adipique cyclisé | 6 % |

| | |
|---|---|
| Le polyester obtenu possède les caractéristiques suivantes : | |
| — viscosité inhérente | 0,65 dlg$^{-1}$ |
| — luminance Y | 22,8 |
| — point de ramollissement PR | > 350 °C |

### Exemple 2

Dans un réacteur identique à celui utilisé dans l'exemple 1, on introduit :

| | | |
|---|---|---|
| — diacétate d'hydroquinone | 77,6 | parties |
| — acide adipique | 29,2 | parties |
| — acétate de magnésium | 0,060 8 | parties |

L'appareil est purgé à l'argon et les réactifs sont chauffés au moyen d'un bain métallique : la réaction débute à 230 °C et se termine à 235 °C en 1 h 10 min, sous pression réduite (532.10$^2$ Pa pendant 10 minutes). On recueille l'acide acétique qui a distillé ; le taux de transformation est de 94,1 %.

On introduit alors 33,2 parties d'acide isophtalique alors que la température de la masse réactionnelle atteint 246 °C. Cette seconde phase est poursuivie sous pression atmosphérique pendant 1 h 15 alors que la température finale atteint 269 °C : le rendement de la réaction d'acidolyse est de 82,9 %.

La pression est abaissée en 40 minutes à 1,33.10$^2$ Pa et la polycondensation effectuée pendant 17 minutes à 283 °C.

| | |
|---|---|
| Le déroulement de la réaction est le suivant : | |
| durée totale de la réaction | 3 h 22 |

Rendement de la réaction d'acidolyse :

0 010 050

| | |
|---|---|
| fin de la 1re phase | 94,1 % |
| fin des deux phases | 82,9 % |
| acide adipique cyclisé | 6 % |

Le copolyester obtenu selon le procédé ci-dessus possède les caractéristiques suivantes :

| | |
|---|---|
| — viscosité inhérente | 0,76 dlg$^{-1}$ |
| (mesurée selon la méthode décrite à l'exemple 1) | |
| — luminance Y | 24,194 |
| • — point de ramollissement PR | 265 °C |

## Exemple 3

A titre comparatif, dans un appareil identique à celui décrit dans l'exemple 1, on introduit les réactifs suivants :

| | | |
|---|---|---|
| — diacétate d'hydroquinone | 77,6 | parties |
| — acide adipique | 29,2 | parties |
| — acide isophtalique | 33,2 | parties |
| — acétate de magnésium | 0,060 8 | parties |

L'appareil est purgé à l'azote et l'on chauffe pour obtenir une température de la masse réactionnelle de 250-260 °C qui est maintenue pendant 3 heures tandis que l'acide acétique distille. La réaction est poursuivie pendant 15 minutes à 260-270 °C tandis qu'on abaisse la pression à 19,9.10$^2$ Pa, puis la polycondensation est terminée pendant 3 h 30 à 285 °C sous 0,266.10$^2$ Pa.

| | |
|---|---|
| Déroulement de la réaction : | |
| durée totale | 6 h 45 |
| rendement de la réaction d'acidolyse | 76,04 % |
| acide adipique cyclisé | 14,75 % |

Le copolyester obtenu a les propriétés suivantes :

| | |
|---|---|
| — viscosité inhérente | 0,47 dlg$^{-1}$ |
| — luminance Y | 7,433 |
| — point de ramollissement PR | 265 °C |

On voit qu'il présente une viscosité inhérente et une luminance nettement plus faibles que celles du copolyester obtenu à l'exemple 2 avec les mêmes quantités des mêmes réactifs mais selon le procédé de la présente invention.

## Exemple 4

Dans un réacteur à polycondensation de 350 ml tel que décrit dans l'exemple 1, on introduit :

| | | |
|---|---|---|
| — diacétate de méthylhydroquinone | 83,4 | parties |
| — acide adipique | 29,2 | parties |
| — acétate de magnésium | 0,060 8 | parties |

On purge l'appareil à l'argon et on chauffe avec un bain métallique : la réaction commence à 285 °C et se termine à 240 °C sous pression réduite (532.10$^2$ Pa) au bout de 1 h 10. Le rendement de la réaction est de 91,04 %.

On introduit alors, sous pression atmosphérique, 33,2 parties d'acide téréphtalique tandis que la température de la masse réactionnelle est élevée à 272 °C pour atteindre en fin de réaction au bout de 2 h 05 une température de 283 °C. Le taux de transformation calculé sur l'ensemble des diacides transformés est de 86,7 %. La pression est ensuite abaissée en 35 minutes à 2,66.10$^2$ Pa, alors que la température est de 287 °C. La polycondensation est effectuée à 283 °C pendant 15 minutes.

| | |
|---|---|
| Déroulement de la réaction : | |
| durée totale | 4 h 05 |

taux de transformation de la réaction d'acidolyse :

| | |
|---|---|
| en fin de 1re phase | 91,4 % |
| en fin des deux phases | 86,7 % |

4

Les caractéristiques du polymère obtenu sont les suivantes :

| | |
|---|---|
| — viscosité inhérente | 1,22 dlg$^{-1}$ |
| — point de ramollissement PR | 207 °C |
| — luminance Y | 35,317 |

## Exemple 5

A titre comparatif, dans un réacteur identique à celui utilisé dans les exemples précédents, on introduit les composés suivants :

| | | |
|---|---|---|
| — diacétate de méthylhydroquinone | 83,4 | parties |
| — acide adipique | 29,2 | parties |
| — acide téréphtalique | 33,2 | parties |
| — acétate de magnésium | 0,0608 | parties |

Après purge de l'appareil à l'azote, la température de la masse réactionnelle est élevée à 260 °C et la réaction d'acidolyse, effectuée pendant 3 heures environ avec élimination d'acide acétique au moyen d'une colonne de distillation.

Le taux de transformation de la réaction d'acidolyse est de 82,7 %.

La polycondensation débute ensuite avec une diminution progressive de la pression pendant 15 min pour atteindre 19,9.10$^2$ Pa. La pression est encore abaissée à 0,266.10$^2$ Pa en 20 min alors que la température de la masse réactionnelle est de 270 °C. La polycondensation est effectuée en 3 h 10 à 285 °C.

Le copolyester obtenu, qui est à comparer avec celui obtenu à l'exemple 4 possède les caractéristiques suivantes :

| | |
|---|---|
| — viscosité inhérente | 1,07 dlg$^{-1}$ |
| — point de ramollissement PR | 207 °C |
| — luminance Y | 26,771 |

## Exemple 6

Dans un réacteur identique à celui de l'exemple 1, on introduit :

| | | |
|---|---|---|
| — diacétate de bis(p-hydroxy phényl)-2,2-propane | 124,8 | parties |
| — acide adipique | 29,2 | parties |
| — acétate de magnésium | 0,060 8 | parties |

On purge l'appareil à l'azote et on chauffe avec un bain métallique ; la réaction commence à 235 °C et se termine à 251° au bout de 1 h 10 sous pression réduite.

Rendement de la réaction : 88,75 %.

On ajoute 33,2 parties d'acide téréphtalique tandis que la température s'élève à 270 °C pour atteindre 283 °C au bout de 2 heures. Le taux de transformation calculé sur l'ensemble des diacides est de 80,8 %.

On réduit progressivement la pression en 35 minutes et la polycondensation a lieu à une température de 280 °C sous 0,266.10$^2$ Pa en 25 minutes.

Déroulement de la réaction :

| | |
|---|---|
| durée totale | 4 h 10 |

Rendement de la réaction d'acidolyse :

| | |
|---|---|
| après la 1$^{re}$ phase | 88,75 % |
| après les deux phases | 80,8 % |
| taux d'acide adipique cyclisé | 6 % |

Le copolyester obtenu a les caractéristiques suivantes :

| | |
|---|---|
| — viscosité inhérente | 0,45 dlg$^{-1}$ |
| — point de ramollissement PR | 207 °C |
| — luminance Y | 22,8 |

## Exemple 7

A titre comparatif, dans un réacteur identique à celui utilisé selon l'exemple 1, on introduit :

| | | |
|---|---|---|
| — diacétate de bis (p-hydroxy phényl)-2,2-propane | 124,8 | parties |

| — acide adipique | 29,2 | parties |
| — acide téréphtalique | 33,2 | parties |
| — acétate de magnésium | 0,060 8 | parties |

On purge l'appareil à l'azote et la réaction s'effectue pendant 2 heures à 260 °C et 7 heures à 265 °C, l'acide acétique étant éliminé par distillation.

Taux de transformation de l'acide adipique : 82,7 %.

On réduit progressivement la pression en 20 minutes à $19{,}9.10^2$ Pa et la polycondensation est effectuée en 3 h 25 à 285° sous $0{,}266.10^2$ Pa.

Déroulement de la réaction :
| — rendement de la réaction d'acidolyse | 79,9 % |
| — acide adipique cyclisé | 9,85 % |

Le copolyester ainsi obtenu a les propriétés suivantes qui sont à comparer à celle du copolyester obtenu à l'exemple 6 :

| — viscosité inhérente | $0{,}36\ dlg^{-1}$ |
| — point de ramollissement PR | 207 °C |
| — luminance Y | 8,815 |

### Exemple 8

Dans un réacteur identique à celui de l'exemple 1, on introduit :

| — diacétate de méthylhydroquinone | 166,4 | parties |
| — acide adipique | 46,72 | parties |
| — acétate de magnésium | 0,169 | parties |

On purge l'appareil à l'azote et on chauffe avec un bain métallique ; la réaction d'acidolyse commence à 225 °C et se termine à 235° en 1 h 15 ; pendant les 15 dernières minutes la réaction est effectuée sous une pression de $465{,}5.10^2$ Pa. Rendement de la réaction 91,53 %.

On ajoute ensuite sous pression atmosphérique 123,84 parties d'acide dicarboxy-4-4'-diphényléther et la 2e phase de la réaction d'acidolyse reprend à 248 °C et se termine en 2 h 15 à 285 °C.

Le rendement global des deux phases est de 83,75 %.

On établit ensuite un vide progressif en 30 minutes et la polycondensation a lieu en 40 minutes à 285 °C sous une pression de $3{,}99.10^2$ Pa

Déroulement de la réaction :
| durée totale | 4 h 40 |

rendement de la réaction d'acidolyse :
| après la 1re phase | 91,53 % |
| après les deux phases | 83,75 % |

Le copolyester ainsi obtenu a les caractéristiques suivantes :

| — viscosité inhérente | 0,384 |
| — température d'écoulement | 223 °C |

**Revendications**

1. Procédé pour l'obtention de copolyesters aromatiques, caractérisé par le fait que l'on fait réagir successivement : à température inférieure à 250° et sous atmosphère inerte un diester d'un composé dihydroxyaromatique et un diacide aliphatique de formule générale $HOOC(CH_2)_nCOOH$ avec $3 \leqslant n \leqslant 10$ avec un rapport molaire diester/diacide aliphatique compris entre 1,5 et 4 jusqu'à un taux d'avancement de la réaction supérieur ou égal à 85 %, puis, à température supérieure à 250° sous atmosphère inerte et sous pression atmosphérique, un acide dicarboxylique aromatique et/ou cycloaliphatique avec un rapport molaire diester/quantité totale des diacides compris entre 0,95 et 1,05 et que l'on polycondense le produit obtenu sous pression réduite pendant une durée inférieure ou égale à 1 h 30.

2. Procédé pour l'obtention de copolyesters aromatiques selon la revendication 1, caractérisé par le fait que le rapport entre le diester d'un composé dihydroxyaromatique et le diacide aliphatique est compris entre 2 et 4.

3. Procédé pour l'obtention de copolyesters aromatiques selon la revendication 1, caractérisé par le fait que le taux d'avancement de la réaction entre le diester d'un composé dihydroxyaromatique et le diacide aliphatique est de 90 % au moins.

4. Procédé pour l'obtention de copolyesters aromatiques selon la revendication 1, caractérisé par le fait que la température de réaction entre le diester d'un composé dihydroxyaromatique et le diacide aliphatique est inférieure ou égale à 240°.

5. Procédé pour l'obtention de copolyesters aromatiques selon la revendication 1, caractérisé par le fait que la réaction entre le diester d'un composé dihydroxyaromatique et le diacide aliphatique est terminé sous pression réduite.

6. Procédé selon 1 caractérisé par le fait que le diester d'un composé dihydroxyaromatique est choisi parmi les composés de formule R—COO—X—OOCR dans laquelle :

R est un radical $CH_3(CH_2)m$ avec m = 0 à 8, de préférence m = 0

X est un radical ortho, méta ou para-phénylène, diphénylène-4,4', diphénylène sulfone, diphénylène éther, diphénylène alcane ou diphénoxyalcane dans lesquels chacun des noyaux phénylène peut comporter 1 à 2 substituants choisis parmi les atomes d'halogène et les radicaux méthyle, éthyle et méthoxy.

7. Procédé selon 1 caractérisé par le fait que l'acide dicarboxylique aromatique ou cycloaliphatique est choisi parmi les diacides de formule HOOC—Y—COOH dans laquelle Y représente un radical méta ou para-phénylène, cyclohexylène-1,3 ou -1,4, diphénylène-4,4', diphénylène sulfone, diphénylène éther, diphénylène alcane, diphénoxyalcane ou un radical comportant des noyaux aromatiques condensés dont les liaisons libres sont en position 2,6 ou 2,7, chacun des cycles pouvant comporter 1 à 2 substituants choisis parmi les atomes d'halogène et les radicaux méthyle, éthyle et méthoxy.

## Claims

1. Process for the preparation of aromatic copolyesters, characterised in that the following are reacted in succession : at a temperature below 250° and under an inert atmosphere, a diester of a dihydroxyaromatic compound and an aliphatic diacid of the general formula $HOOC(CH_2)_nCOOH$, in whihc $3 \leqslant n \leqslant 10$, with a molar ratio diester/aliphatic diacid of between 1.5 and 4, until the degree of completion of the reaction is greater than or equal to 85 % and then, at a temperature above 250°, an aromatic and/or cycloaliphatic dicarboxylic acid, with a molar ratio diester/total amount of the diacids of between 0.95 and 1.05, and in that the product obtained is subjected to polycondensation under reduced pressure for a period which is less than or equal to 1 hour 30 minutes.

2. Process for the preparation of aromatic copolyesters, according to Claim 1, characterised in that the ratio of the diester of a dihydroxyaromatic compound to the aliphatic diacid is between 2 and 4.

3. Process for the preparation of aromatic copolyesters, according to Claim 1, characterised in that the degree of completion of the reaction of the diester of a dihydroxyaromatic compound with the aliphatic diacid is at least 90 %.

4. Process for the preparation of aromatic copolyesters, according to Claim 1, characterised in that the temperature of the reaction of the diester of a dihydroxyaromatic compound with the aliphatic diacid is less than or equal to 240°.

5. Process for the preparation of aromatic copolyesters, according to Claim 1, characterised in that the reaction of the diester of a dihydroxyaromatic compound with the aliphatic diacid is terminated under reduced pressure.

6. Process according to 1, characterised in that the diester of a dihydroxyaromatic compound is chosen from amongst the compounds of the formula R—COO—X—OOCR, in which :

R is a radical $CH_3(CH_2)_m$, in which m = 0 to 8 and preferably m = 0,

X is an ortho-, meta- or para-phenylene, 4,4'-biphenylene, diphenylene sulphone, diphenylene ether, diphenylenealkane or diphenoxyalkane radical, in which radicals each of the phenylene nuclei can contain 1 to 2 substituents chosen from amongst halogen atoms and methyl, ethyl and methoxy radicals.

7. Process according to 1, characterised in that the aromatic or cycloaliphatic dicarboxylic acid is chosen from amongst the diacids of the formula HOOC—Y—COOH, in which Y represents a meta-phenylene or para-phenylene, 1,3-cyclohexylene or 1,4-cyclohexylene, diphenylenealkane or diphenoxyalkane radical or a radical containing fused aromatic nuclei of which the free bonds are in the 2,6-positions or 2,7-positions, it being possible for each of the rings to contain 1 to 2 substituents chosen from amongst halogen atoms and methyl, ethyl and methoxy radicals.

## Ansprüche

1. Verfahren zur Herstellung von aromatischen Copolyestern, dadurch gekennzeichnet, daß man nacheinander reagieren läßt : bei einer Temperatur unter 250° und unter inerter Atmosphäre einen Diester einer aromatischen Dihydroxyverbindung und eine aliphatische Disäure der allgemeinen Formel $HOOC(CH_2)_nCOOH$ mit $3 \leqslant n \leqslant 10$, wobei das molare Verhältnis Diester/aliphatische Disäure 1,5 bis 4 beträgt, bis zu einem Umsetzungsgrad von 85 % oder mehr, dann, bei einer Temperatur über 250°, eine aromatische und/oder cycloaliphatische Dicarbonsäure, wobei das molare Verhältnis Diester/Gesamtmenge der Disäuren 0,95 bis 1,05 beträgt, und daß man das erhaltene Produkt unter vermindertem Druck während eines Zeitraumes von bis zu 1 h 30 min polykondensiert.

2. Verfahren zur Herstellung aromatischer Copolyester nach Anspruch 1, dadurch gekennzeichnet, daß das Verhältnis zwischen dem Diester einer aromatischen Dihydroxyverbindung und der aliphatischen Disäure zwischen 2 und 4 liegt.

3. Verfahren zur Herstellung aromatischer Copolyester nach Anspruch 1, dadurch gekennzeichnet, daß der Umsetzungsgrad des Diesters einer aromatischen Dihydroxyverbindung und der aliphatischen Disäure zumindest 90 % beträgt.

4. Verfahren zur Herstellung aromatischer Copolyester nach Anspruch 1, dadurch gekennzeichnet, daß die Temperatur bei der Reaktion zwischen dem Diester einer aromatischen Dihydroxyverbindung und der aliphatischen Disäure 240° oder weniger beträgt.

5. Verfahren zur Herstellung aromatischer Copolyester nach Anspruch 1, dadurch gekennzeichnet, daß die Reaktion zwischen dem Diester einer aromatischen Dihydroxyverbindung und der aliphatischen Disäure unter vermindertem Druck beendet wird.

6. Verfahren nach Anspruch 1, dadurch gekennzeichnet, daß der Diester einer aromatischen Dihydroxyverbindung ausgewählt wird aus den Verbindungen der Formel R—COO—X—OOCR, worin :

R ein Rest $CH_3(CH_2)_m$ mit $m = 0$ bis 8, vorzugsweise $m = 0$, ist,

X ein o-, m- oder p-Phenylen-, 4,4'-Diphenylen-, Diphenylensulfon-, Diphenylenäther-, Diphenylenalkan- oder Diphenoxyalkanrest ist, worin jener Phenylenring ein bis zwei Substituenten, ausgewählt aus den Halogenatomen und den Methyl-, Äthyl- und Methoxygruppen, tragen kann.

7. Verfahren nach Anspruch 1, dadurch gekennzeichnet, daß die aromatische oder cycloaliphatische Dicarbonsäure ausgewählt ist aus den Disäuren der Formel HOOC—Y—COOH, worin Y einen m- oder p-Phenylen-, 1,3- oder 1,4-Cyclohexylen-, Diphenylenalkan-, Diphenoxyalkanrest oder einen Rest darstellt, der kondensierte aromatische Ringe aufweist, deren freie Bindungen in 2,6- oder 2,7-Stellung vorliegen, wobei jeder der Ringe 1 bis 2 Substituenten, ausgewählt aus den Halogenatomen und den Methyl-, Äthyl- und Methoxygruppen, tragen kann.